Europäisches Patentamt

European Patent Office

Office européen des brevets

(11) Publication number: **0 221 687**
A1

(12) **EUROPEAN PATENT APPLICATION**

(21) Application number: 86307784.8

(22) Date of filing: 08.10.86

(51) Int. Cl.⁴: **C25D 9/04** , C25D 13/02 , C23D 5/02 , C03C 8/02 , C03C 8/14 , C03C 8/22

(30) Priority: 11.10.85 US 786814

(43) Date of publication of application:
13.05.87 Bulletin 87/20

(84) Designated Contracting States:
CH DE FR GB IT LI

(71) Applicant: **Kennecott Corporation**
**The Standard Oil Company Headquarters**
**Building 200 Public Square**
**Cleveland Ohio 44114-2375(US)**

(72) Inventor: **Whitney, John Butler**
**202 Park Road**
**Pittsford New York 14534(US)**
Inventor: **Carter, William W.**
**5889 Clark Road**
**Conesus New York 14435(US)**

(74) Representative: **Adams, William Gordon et al**
**RAWORTH, MOSS & COOK 36 Sydenham**
**Road**
**Croydon Surrey CR0 2EF(GB)**

(54) **Electrodeposited thick glass coatings for severe corrosive service.**

(57) Uniform, corrosion resistant vitreous linings for lining equipment and accessories used in processing and manufacturing chemicals and pharmaceuticals have thicknesses in the range of about 35 to 85 mils, and are supplied by electrodeposition methods without multiple intermediate firing steps.

# ELECTRODEPOSITED THICK GLASS COATINGS FOR SEVERE CORROSIVE SERVICE

The present invention relates generally to improved corrosion resistant vitreous coated substrates and methods of manufacturing such substrates, and more specifically, to electrodeposited vitreous linings for pipes, vessels, accessories and other chemical and pharmaceutical equipment or products.

Glass lined vessels and other chemical processing equipment have found widespread use in numerous industries, particularly in those industries which require the storage or reaction of chemicals or pharmaceuticals. Such equipment finds use, for instance, in reaction, extraction, suspension and distillation processes to name but a few. The linings permit the use of such equipment under various adverse temperature and corrosive conditions.

The customary procedure for lining vessels, etc. with thick vitreous coatings of 40 mils or more usually involves a multiplicity of manufacturing steps, starting with the application of an initial ground coat to the vessel which is dried and then fired. In some instances, a second ground coat is applied and it too must be dried and then separately fired. Multiple cover coats, often five or more, are than applied over the ground coat, each requiring independent drying and firing steps. Such coatings are applied by spraying or by spraying followed by powder application or by powder application alone.

An alternative process for glass lining vessels is the hot dust technique. In this method, powdered glass is shaken on a ground coated substrate while it is still hot from firing. The powdered glass adheres and partially fuses to the wall of the substrate. The coating is then fired until fusion is complete. Subsequent coats of powdered glass are normally applied until the desired thickness is achieved, each coating being fired after partial fusion.

In the foregoing processes for making thick (40 mil or more) vitreous linings, multiple intermediate firing steps are required resulting in noneconomic, low production efficiency manufacturing. This disadvantage has prompted efforts to develop alternative processes wherein thick cover coats can be applied in one step over wet, dry or fired ground coats. However, prior efforts to develop suitable alternatives have not been totally satisfactory. Single heat treatments, for instance, have led to defects in vitreous coatings which are manifested by the formation of blisters, tearing of the coating, and sagging whereby the cover coat runs or beads on the substrate. Accordingly, there is a need for an improved more economic method for making corrosion resistant, thick vitreous linings free of defects, which can be prepared without multiple intermediate heating steps.

The present invention relates to coatings for application to electrically conductive substrates. Vitreous linings, which are substantially free of defects, for example blisters, are prepared by an improved process which eliminates multiple intermediate firing steps. The linings may be generally described as thick vitreous corrosion resistant linings of at least 20 mils in thickness. They should not be confused with porcelain enamel linings used, for example, in the home appliance industry, typically consisting of porcelain enamels of only 4 to 5 mils in thickness. Appliance linings have lower specifications for thickness, corrosion resistant, wear and impact resistance. Appearance and colour are more primary considerations.

The vitreous linings are applied by electrodeposition methods using novel aqueous slips. The electrically conductive substrate which is usually a metal or metal clad base material first receives an electrodeposited ground coat in an electrodeposition bath containing a novel ground coat slip. The ground coated workpiece then receives an electrodeposited cover coat in another electrodepositing bath containing a novel cover coat slip. The thickness of the coats is regulated by the residency time in their respective baths. Coating times generally require not more than 1 minute or so. The ground coat and cover coated substrate is dried and then fired once only. The lined workpiece is allowed to cool. It has a smooth, continuous corrosion resistant coating with a heavy, uniform thickness over the entire surface which is virtually free of defects.

The present invention is concerned with the application of thick, uniform, corrosion resistant vitreous linings on various. substrates. For purposes of this invention the expression-corrosion resistant - is intended to mean vitreous linings which undergo a loss in thickness of less than 20 mils/year when exposed to a boiling solution of 20 percent hydrochloric acid as measured by the International Organization for Standardization procedure ISO 2743. The ISO procedure is a seven day corrosion test conducted by exposing workpiece samples to liquid and vapour phase HCl. This would include sample preparation according to ISO 2723 using equipment and apparatus (test unit) according to ISO 2733.

The linings are principally intended for application over electrically conductive glassable substrates which can be coated by electrodepositing methods. This would include, for example, metallic substrates like cast iron, steel, including stainless steels, high alloy steels, mild steels and any other variety of steel used in fabricating equipment for processing and manufacturing chemicals and pharmaceuticals, including heat exchangers, pipes, holding vessels, reactors, tanks, as well as baffles, agitators, covers, valves and other tank accessories which require lining for protection from corrosive environments. This would also include electrically conductive metals cladded substrates, such as copper clad ceramic materials.

The substrate first receives a ground coat which will have a thickness generally in the range of about 5 to about 20 mils, and more specifically, from about 8 to about 12 mils. The ground coated substrate then receives a cover coat which may also vary in thickness. However, the thickness of the cover coat should be sufficient so that when combined with the ground coat the final fired vitreous lining will generally range from about 20 to about 85 mils. Thus, the final fired lining combines at least two vitreous layers into a single, but heterogeneous coating. That is, although the lining is formed from a plurality of layers which become fused into a single integral structure each layer of the lining still retains its own identity and special properties. This can be illustrated where, for example, the outer cover coat provides resistance to corrosion; the inner ground coat provides strong adherence to the substrate.

Novel glass-containing slips provide the ground and cover coats which are deposited by electrochemical means. The aqueous slips perform as the electrolyte in the electrodeposition process by supporting charge transfer by electrophoretic conduction whereby negatively charged particles from the slips are deposited on the substrate, which performs as the anode. Therefore, both the ground and cover coat slips have been specially adapted for efficient electrodepositing techniques requiring only a single firing step to form thick, corrosion resistant heavy duty coatings which are substantially free of defects. In this regard, electrical conductivities of the slips are below the conductivities of conventional slips used for glass coating, and more specifically, have electrical conductivities less than about 3,000 μmho/cm. In addition, the ground and covere coat slips should be substantially free of inorganic electrolytes, not exceeding about 200 ppm. Electrolytes such as sodium nitrite, sodium aluminate, borax, etc. customarily found in porcelain enamel slips, are neither required nor desirable in the slips of the present invention, since they have a tendency to increase the electrical conductivity of the slurry.

The ground coat slip is a slurry containing a glass frit, a refractory mill addition such as silica, zirconia, titania, alumina, etc. clay, and water. Generally, the ground coat slip should contain sufficient refractory mill addition to prevent sagging during the entire firing step. In other words, silica may be employed in amounts ranging from about 10 to about 45 parts/100 parts by weight frit. Other refractory mill additions like zircon may be employed in amounts from about 5 to about 20 parts/100 parts by weight frit.

The ground coat frit of the present invention may consist of any single or combination of glass frits which will impart the desired final firing temperature to the deposited slip. However, the ground coat frit(s) selected should have fusion temperatures of 50°F (28°C) or more below the fusion temperature of the frit employed in the cover coat. The firing temperature of the ground coat should range from about 1,400°F to about 1,550°F (about 760°C to about 843°C). For purposes of the present invention firing temperature is intended to mean the temperature at which the glasses in the deposited lining fuse and allow gases to bubble through, resulting in a smooth, continuous surface. Accordingly, the ground coat frit may advantageously consist of a blend of two or more frits, for example a high temperature ground coat frit having a firing temperature of 1,600°F (871°C) and a second ground coat frit having a lower firing temperature of 1,400°F (760°C) to provide an adjusted firing temperature, for example 1,500°F (816°C).

A typical ground coat slip may contain for each 100 parts by weight frit, approximately 10 to about 20 parts silica, about 2 to about 6 parts clay and about 40 to 50 parts water. In addition to the foregoing, to retard settling certain materials may be added, particularly not-ionized materials such as gels and gums, like guar gum, tragacanth, acacia, etc. The pH of the ground coat slip will generally range from between about 9 and 12 and will have a low electrical conductivity of from about 800 to about 2,000 μmho/cm.

Methods and procedures for blending and milling slips are well established and documented in the art, any of which may be employed in the processes described herein.

The cover coat slip is also a slurry comprising, for each 100 parts by weight frit, about 3 to about 20 parts silica, if used, or other equivalent refractory mill addition material, about 2 to about 3.5 parts clay, about 0 to about 3 parts opacifier, for example cerium oxide or titanium oxide, and about 40 to about 50 parts water. The firing temperature of the cover coat should be substantially the same as the firing temperature of the ground coat. Therefore, the cover coat should also fire at a temperature of about 1,400°F to about 1,550°F (about 760°C to about 843°C). Due to differences in frit composition, the pH and electrical conductivities of the cover coat will be somewhat higher than the ground coat. However, as in the case of the ground coat slip the cover coat slips should also have electrical conductivities of below about 3,000 μmho/cm, and also be substantially free of added inorganic electrolytes. In this regard, the pH of the cover coat slip will be about 10.5 to 13, and the electrical conductivity will range from about 1,200 to about 2,200 μmho/cm.

In addition to refractory mill additions, such as silica, the slips of the present invention may also contain filler materials to impart special properties to the coatings, such as improved impact strength, increased electrical conductivity and increased thermal conductivity. They include but are not limited to fibrous, particulate and flake type materials. Specific representative fibrous materials include millite and E-glass for improved impact strength. Particulate materials include beryllium oxide and silicon nitride for increased thermal conductivity. Mica flakes may also be employed. Such fillers may be added to either or both the ground or cover coat slips at about 10 to about 50 parts/100 parts by weight frit.

As previously indicated, the glass-containing slips are applied by electrodepositing methods which include electrophoresis. The substrate being lined with the vitreous coatings of the present invention functions as the anode. Any of the commercially available steel bar cathodes may be employed. Special cathode designs do not appear to be critical. One or more cathodes consisting of stainless steel, for instance, perform satisfactorily. The surfaces of the substrate being coated are in contact with the coating slips. In depositing the ground coat an outside power source (DC) is connected with the cell impressing about 30 to about 100 volts at a current density of about 10 to about 30 amps/ft² (about 107 to about 323 amps/m²) of substrate. In less than about a minute, depending on the actual thickness of the ground coat desired, the power is shut down, and the substrate removed from the slip. Before placing the ground coated substrate into the cover coat slip, any nonadherent ground coat is removed by rinsing with water.

Without either drying or firing the ground coated substrate, a cover coat is now applied by similar electrodepositing means as used in depositing the ground coat. The cover coat may be applied by impressing a voltage across the cell ranging from about 20 to about 60 volts at a current density of about 5 to about 20 amps/ft² (about 53 to about 215 amps/m²) of substrate. The coating time is determined by the desired final thickness of the cover coat which may range generally from about 15 to about 60 mils. The actual coating time may be less than 2 minutes, and more specifically, will range from about 25 to about 60 seconds. Any excess slurry remaining on the substrate is then removed by washing off with water. The workpiece is then removed by washing off with water. The workpiece is then dried. Drying may be performed by allowing the substrate to simply air dry at ambient temperature conditions or at elevated temperatures by any conventional drying method. The dried and coated substrate is then fired at temperatures generally in the range of about 1,400°F to about 1,550°F (about 760°C to about 843°C) and will continue for the time required to melt the glasses in the coatings and allow them to react with the metal substrate, dissolving metal oxides in the substrate and permitting absorption of gases during the reaction. Once bubbling of the coating has terminated and a smooth, continuous finish develops, firing has been completed and the workpiece is allowed to cool.

More preferably, however, the firing step is carried out using a firing cycle involving a sequence of varying temperatures and dwell times, instead of a continuous, fixed, predetermined temperature. During the first stage of the firing cycle the coated workpiece is fired at the lower fusion temperature of the ground coat frit for a sufficient time to permit the reaction between the substrate and ground coat to go to completion. The firing temperature is elevated to the higher fusion temperature of the cover coat frit in the second stage of the firing cycle after bubbling of gases from the surface have terminated. This higher temperature is maintained for sufficient time to permit a smooth and continuous outer surface to form. The firing cycle is then complete and the workpiece is allowed to cool.

The present invention also contemplates the application of three or more different coatings with a single firing. For instance, before firing the ground and cover coated substrate, a final glaze layer may be applied for added corrosion resistant properties. The composite is then fired without other intermediate firing steps. The present invention also contemplates multi-layered, corrosion resistant glasses for lining various metal conduits and vessels by electrodepositing a ground coat followed by a cover coat consisting of a glass which when fired will produce a precipitated crystalline phase of sodium aluminium silicate and lithium silicate, like than available under the designation "Nucerite", a trademark of the Pfaudler Company, Rochester, New York. Such products are disclosed, for example, in the specification of U.S. Patent 3 368 712. A final corrosion resistant glaze layer may also be applied thereafter.

The following specific example demonstrates the subject matter of the instant invention, however, it is to be understood that this example is for illustrative purposes only and does not purport to be wholly definitive as to conditions and scope.

## EXAMPLE

A ground coat slip was first prepared by grinding the following materials in a laboratory ball mill:
For each 100 parts by weight frit:
Silica...................15 parts
Clay......................4.8 parts
Deionized Water..........40 parts
The frit was a blend of glass particulates comprising a low-firing frit of about 1,300°F (704°C) firing temperature, a frit having an intermediate firing temperature of about 1,500°F (816°C) and a high-firing frit having a firing temperature of about 1,550°F (843°C).

The silica, clay, water, and blend of frits without added electrolytes were ground to a fineness of 60 to 70 percent by weight less than 325 mesh. The slip had a specific gravity of 1.7 to 1.8. The slip was removed from the ball mill and sufficient water added to adjust the specific gravity to 1.5 to 1.6. In order to give added body to the slip and retard settling, a set-up material was added at a concentration of 0.5 cc/1,000 grams of slip. The set-up material consisted of a 50/50 mixture of deionized water and a cationic polyelectrolyte available under the name of Cat-Floc T, a trademark of the Calgon Corporation. The pH of the slip was checked to assure that it was about 10. The conductivity of the ground coat slip was about 900 μmho/cm.

A cover coat slip was also prepared employing the steps used above in making the ground coat slip. However, the cover coat slip had the following formulation:
For each 100 parts by weight frit:
Silica...................5 parts
Clay......................2.8 parts
Deionized Water..........40 parts
Instead of using a blend of frits as employed in the ground coat, a single low temperature cover coat frit was used with a firing temperature of about 1,450°F (788°C). In order to improve the overall corrosion resistent properties of the cover coat the amount of clay was reduced from that used in the ground coat.

Due to the differences between the compositions, the pH and conductivity of the cover coat were higher than those of the ground coat. The pH of the cover slip was about 12 and the conductivity was about 1,850 μmho/cm.

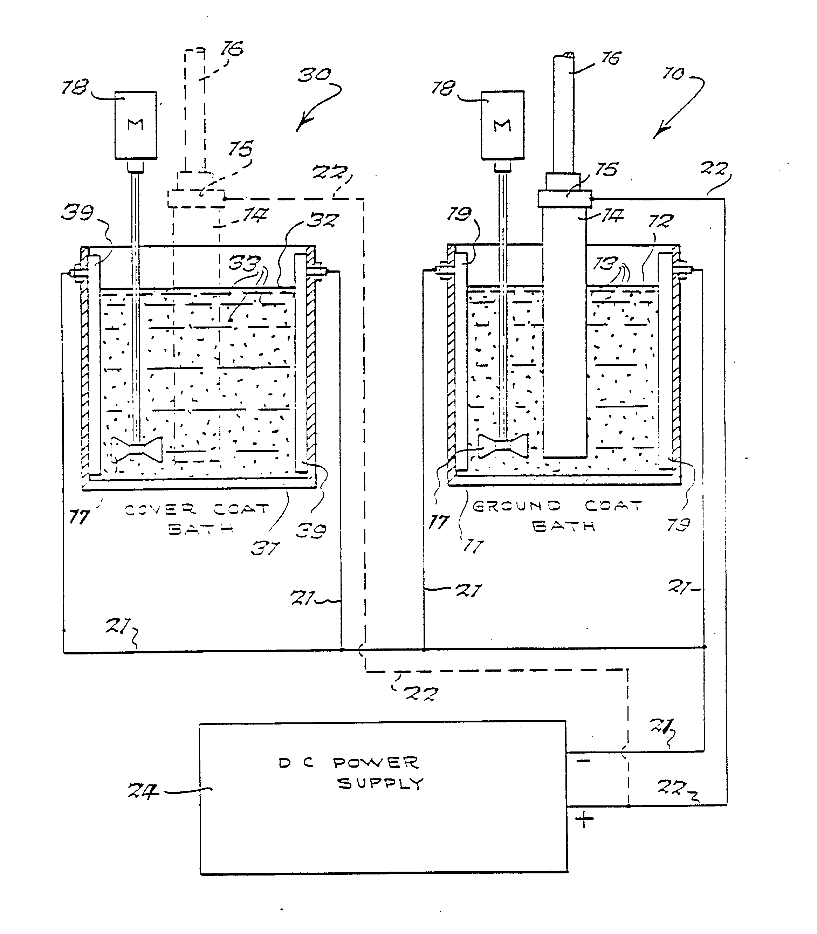

As illustrated in the accompanying drawing, separate electrodeposition baths 10 and 30 were set up. The ground coat 12 with its dispersion of particulates 13 was placed in bath 11 and the cover coat 32 with its dispersion of particulates 33 placed in bath 31. Each bath was equippped with a motorized stirrer 18 having an impeller blade 17 to maintain the particulates in a suspended state. The baths were substantially rectangular in shape with four adjoining sidewalls. Each interior sidewall had a solid stainless steel bar 19 and 39, which performed as cathodes. This series of cathodes was connected in a parallel circuit with leads 21 to a DC power supply 24, a Sorensen DCR 300-6B rectifier rated at 300 volts at 6 amps. The substrate to be coated was a steel pipe 14 which functioned as the anode. A collar 15 supported by rod 16 in the centre of the ground coat bath was connected to power supply 24 by leads 22.

Before connecting the workpiece for electodepositing it was cleaned by sand blasting. The pipe 14 was then connected to holder 15 and the power supply and lowered into the bath. A constant voltage of 60 volts at a current density of 22 amps/ft² (237 amps/m²) was applied for 20 seconds and then terminated. The coated pipe was disconnected and removed from the ground coat bath and rinsed in deionized water to remove a thin film of nonadherent material. A uniform adherent coating remained on the workpiece which was durable enough to handle without damaging.

Without drying, the ground coated workpiece was connected in a similar manner to the cover coat electrodepositing set-up 30. 60 volts was applied at a current density of about 5 amps/fr² (54 amps/m²) for 40 seconds. The ground and cover coated pipe was then removed from the apparatus, washed in water, air dried, and fired according to the following schedule: 1,200°F (649°C) for 5 minutes; 1,300°F (704°C) for 5 minutes; 1,400°F (760°C) for 5 minutes and 1,500°F (816°C) for 5 minutes. Firing was performed in an electric furnace made by the Hevi-Duty Electric Company, Milwaukee, Wisconsin, having a maximum heating temperature of 1,850°F (1,010°C). The finished piece had a fired ground coat thickness of 10-12 mils and a total thickness of 38 mils, and was free of defects.

While the invention has been described in conjunction with a specific example thereof, this is illustrative only. Accordingly, many alternatives, modifications and variations will be apparent to those skilled in the art in light of the foregoing descriptions, and it is therefore intended to embrace all such alternatives, modifications and variations as to fall within the spirit and broad scope of the appended claims.

## Claims

1. A method of forming heavy duty coatings on a substrate, which comprises the steps of providing a vitreous ground coat slurry and a vitreous cover coat slurry, electrodepositing the ground coat slurry onto the substrate to provide a ground coated substrate, electrodepositing the cover coat slurry on the ground coated substrate to provide a cover and ground coated substrate, and firing said coated substrate to provide a corrosion resistant final fired coating of at least 20 mils in thickness which coating is substantially free of defects.

2. A method according to claim 1 wherein the substrate is electrically conductive and includes the step of forming the final fired coating with one firing step, the ground coat and the cover coat having firing temperatures which are substantially the same.

3. A method according to claim 1 or 2 including the steps of removing nonadherent ground and cover coat slurries from the substrate and drying the coated substrate before firing.

4. A method according to claim 1, 2 or 3 including the step of forming a final fired vitreous coating having a thickness of about 20 to about 85 mils with a resistance to corrosion which results in a loss of less than 20 mils per year of the coating when exposed to a solution of boiling 20 percent hydrochloric acid as measured by procedure ISO 2743.

5. A method according to any one of the preceding claims including the step of providing the ground and cover coat slurries with low electrical conductivities.

6. A method according to claim 5 wherein the slurries have electrical conductivities of below about 3,000 μmho/cm.

7. A method according to any one of the preceding claims including the step of providing the ground and cover coat slurries comprising ground coat frits and cover coat frits respectively.

8. A method according to claim 7 wherein the frit-containing ground coat slurry and frit-containing cover coat slurry are substantially free of inorganic electrolytes.

9. A method according to claim 7 or 8 including the step of providing a ground coat slurry and cover coat slurry in which the ground coat frit in the ground coat slurry has a fusion temperature of at least 50°F (28°C) below the fusion temperature of the cover coat frit in the cover coat slurry.

10. A method according to any one of the preceding claims including the step of providing the ground coat slurry with sufficient refractory mill addition to avoid sagging during the firing step.

11. A method according to claim 7, 8 or 9 or claim 10 as dependent upon claim 7, 8 or 9 including a firing cycle which comprises the steps of first heating the ground and cover coated substrate at the fusion temperature of the ground coat frit for sufficient time to permit the reaction between the substrate and ground coat to be substantially complete, and raising the firing temperature to that of the fusion temperature of the cover coat frit.

12. A method according to claim 2 or any one of claims 3 to 11 as dependent upon claim 2 including the step of depositing the slurries by means of electrophoretic deposition.

13. A method according to claim 12 wherein the electrophoretic deposition of the ground coat slurry is performed by applying from about 30 to about 100 volts at a current density of about 10 to about 30 amps/ft² (about 107 to about 323 amps/m²) of substrate.

14. A method according to claim 13 including the step of depositing the cover coat slurry by applying from about 20 to about 60 volts at a current density of about 5 to about 20 amps/ft² (about 53 to about 215 amps/m²) of substrate.

15. A method according to any one of the preceding claims including the step of applying a final glaze layer over the cover coated substrate before the firing step.

16. A method according to any one of the preceding claims including the steps of electrodepositing a glass-containing, low silica ground coat slurry, electrodepositing a glass-containing, cover coat slurry having a precipitated crystalline phase comprising sodium aluminium silicate and lithium silicate, drying the coated substrate, and firing.

17. A method according to any one of the preceding claims including the step of providing at least one of the slips with a filler material.

18. A method according to claim 17 wherein the filler material is present in a sufficient amount to increase the impact strength, increase the thermal conductivity or increase the electrical conductivity of the final fired coating.

19. A corrosion resistant vitreous coated substrate, which comprises a metallic substrate and a vitreous coating of at least 20 mils in thickness on at least one surface of said substrate, said vitreous coating comprising a plurality of heterogeneous layers fused into initized composite-like structure which is integral with the substrate, said coating being substantially free of defects.

20. A vitreous coated substrate according to claim 19 wherein the fused composite coating comprises glass, the thickness of the coating is from about 35 to about 85 mils and has a corrosion resistance resulting in a loss in coating thickness of less than 20 mils/year when exposed to a boiling solution of 20 percent hydrochloric acid as measured by procedure ISO 2743.

21. A vitreous coated substrate according to claim 19 or 20 made according to a process whereby the coating is fired one time.

22. A vitreous coated substrate according to claim 19, 20 or 21 wherein the metallic substrate comprises a tank, such as a tank fabricated from stainless steel, a high alloy steel or a mild steel, or tank baffles, agitators, covers and other tank accessories, or a heat exchanger, or a pipe, or a valve.

23. A vitreous coated substrate according to claim 19, 20 or 21 wherein the metallic substrate is a steel tank having its interior surface lined with said coating.

24. An aqueous slip composition comprising a frit, a clay amd a sufficient amount of a refractory mill addition to prevent sagging during firing, said composition having suitable electrical conductivity for electrodepositing a heavy duty, corrosion resistant protective coating.

25. A composition according to claim 24 wherein the electrical conductivity of the slip is below about 3,000 $\mu$mho/cm.

26. A composition according to claim 24 or 25 including a filler material.

27. A composition according to claim 26 wherein the filler is in the form of a fibrous, particulate or flake material present in an amount sufficient to enhance impact strength, thermal conductivity or electrical conductivity of the protective coating after firing.

28. A composition according to any one of claims 24 to 27 wherein the slip is substantially free of inorganic electrolytes.

29. A composition according to any one of claims 24 to 28 wherein the aqueous slip is a ground coat slurry comprising at least one ground coat frit, about 10 to about 20 parts of a refractory metal oxide/100 parts by weight frit, about 2 to about 6 parts clay/100 parts by weight frit and about 40 to about 50 parts water/100 parts by weight frit.

30. A composition of claim 29 wherein the ground coat slip has an electrical conductivity of about 800 to about 2,000 $\mu$mho/cm.

31. A composition according to any one of claims 24 to 30 wherein the aqueous slip is a cover coat slurry comprising at least one cover coat frit, a refractory metal oxide, a clay and water whereby the slurry has an electrical conductivity of about 1,200 to about 2.200 $\mu$mho/cm.

## DOCUMENTS CONSIDERED TO BE RELEVANT

EP 86307784.8

| Category | Citation of document with indication, where appropriate, of relevant passages | Relevant to claim | CLASSIFICATION OF THE APPLICATION (Int. Cl.4) |
|---|---|---|---|
| A | GB - A - 1 228 434 (FARBENFABRIKEN BAYER AG) <br><br> * Page 2, lines 3-15, page 3, lines 67-92 * | 1,12 | C 25 D 9/04 <br> C 25 D 13/02 <br> C 23 D 5/02 <br> C 03 C 8/02 |
| A | GB - A - 2 117 796 (STANDARD TELE-PHONES AND CABLES PUBLIC LIMITED COMPANY) <br><br> * Abstract; claims * | 1,12, 19 | C 03 C 8/14 <br> C 03 C 8/22 |
| A | DE - A - 1 621 406 (FARBENFABRIKEN BAYER AG) <br><br> * Claims * | 1,12 | |
| A | DE - A - 2 059 896 (GENERAL ELECTRIC CO.) <br><br> * Claims * | 1,12 | TECHNICAL FIELDS SEARCHED (Int. Cl.4) |
| A | DE - A1 - 3 405 767 (ASTA ULLRICH GMBH) <br><br> * Claims * | 1,12, 19 | C 25 D <br> C 23 D <br> C 03 C |
| A | PATENT ABSTRACTS OF JAPAN, unex-amined applications, C field, vol. 9, no. 271, October 29, 1985 <br><br> THE PATENT OFFICE JAPANESE GOVERN-MENT <br> page 137 C 311 <br><br> * Kokai No. 60-121 279 (MAT-SUSHITA DENKI SANGYO K.K.) * | 1,12, 19 | |

The present search report has been drawn up for all claims

| Place of search | Date of completion of the search | Examiner |
|---|---|---|
| VIENNA | 23-12-1986 | SLAMA |